## Europäisches Patentamt

## European Patent Office

## Office européen des brevets

(11) Publication number: **0 109 988**
**B1**

(12) **EUROPEAN PATENT SPECIFICATION**

(45) Date of publication of patent specification: **28.01.87**

(51) Int. Cl.⁴: **B 23 K 1/08**

(21) Application number: **82306268.2**

(22) Date of filing: **24.11.82**

(54) Soldering apparatus.

(43) Date of publication of application:
**13.06.84 Bulletin 84/24**

(45) Publication of the grant of the patent:
**28.01.87 Bulletin 87/05**

(84) Designated Contracting States:
**BE DE FR GB**

(56) References cited:
**EP-A-0 005 883**
**EP-A-0 058 766**
**US-A-3 119 363**
**US-A-4 101 066**

(73) Proprietor: **NIHON DENNETSU KEIKI CO., LTD.**
**27-1, Shimomaruki 2-chome**
**Ohta-ku Tokyo (JP)**

(72) Inventor: **Kondo, Kenshi**
**3-5, Ohkura 1-chome**
**Setagaya-ku Tokyo (JP)**

(74) Representative: **Allam, Peter Clerk et al**
**LLOYD WISE, TREGEAR & CO. Norman House**
**105-109 Strand**
**London WC2R 0AE (GB)**

## Description

This invention relates to an apparatus for soldering printed circuit boards.

To reply to recent demands for compact electrical appliances and instruments, there is a tendency to use small thin chip type electric parts for mounting on the printed circuit boards in place of the conventional discrete type electric parts. From the view point of the parts mounting operation, the chip type parts also excel the discrete type parts in that the former can be fixed on a board by way of face bonding and can be mounted in positions automatically in a facilitated manner and at a lower cost, whereas the latter parts are difficult to insert into the printed circuit boards by an automatic operation and require an increased number of steps, for example, a step for cutting off pendant lead wire portions.

Although there have thus far been proposed various soldering apparatus for printed circuit boards, they invariably give rise to problems of soldering failures when applied to printed circuit boards bearing the chip type parts due to the recesses defined between adjacent chip type parts or behind the chip type parts as seen in the direction of travel of the boards. Such recessed or space can block the molten solder from flowing thereinto and can trap gases therein, causing incomplete deposition of the solder. The air bubbles which are once trapped in the recesses are difficult to remove even if the molten solder is poured over the printed circuit board over a long time period.

In addition, the conventional soldering technique involves a problem that the chip type parts unavoidably undergo thermal shocks when subjected to the soldering temperature. More specifically, with the conventional soldering apparatus, even if the printed circuit boards are preheated to a level proximate to the soldering temperature in a preheating zone, there would occur a material temperature drop during the transfer thereof from the preheating zone to the soldering zone. As a matter of fact, since there is a limit in the preheating temperature, it is difficult to control the temperature of the printed circuit boards as introduced into the soldering zone to a level close to the soldering temperature.

It is known, for example from US—A—4101066 and EP—A—0055323, to solder printed circuit boards using soldering apparatus which generates a wave of overflowing solder which extends towards the path of travel of the printed circuit boards past the apparatus, whereby the lower side of each printed circuit board is brought into contact with the upper surface of the wave of solder to apply solder thereto. In EP—A—0055323, the soldering apparatus disclosed comprises:

a first open-topped tank for containing a first molten solder;

a second open-topped tank located in a position adjacent to and downstream of said first tank along said path of travel of said printed circuit board for containing a second molten solder;

an upwardly extending nozzle member having the lower end thereof in flow communication with said first tank;

solder feed means operable for supplying said first molten solder in said first tank to said nozzle member to cause said first molten solder to overflow from the tip end of said nozzle member;

said nozzle member having an overflowing outlet at the upper end thereof which is oriented to form a wave of overflowing solder extending in the direction of said path of travel of said printed circuit board; and

means for applying said second molten solder in said second tank to said printed circuit board;

whereby the lower side of said printed circuit board is brought into co-current contact with the upper surface of said wave to preheat said printed circuit board and to apply said first molten solder thereto, and said printed circuit board subjected to the treatment with said first molten solder is then subjected to the soldering treatment with said second molten solder.

In accordance with the present invention there is provided a soldering apparatus of this general kind, in which the overflowing outlet of the nozzle member is provided with toothed portions therearound for roughening the upper surfaces of the wave of overflowing solder from the nozzle member.

The roughening of the upper surfaces of the wave of solder has the desirable effect of urging the molten solder into the recessed portions on the lower sides of the printed circuit boards being soldered.

One exemplary embodiment of soldering apparatus in accordance with the present invention will now be described with reference to the accompanying drawings, in which:

Fig. 1 is a cross-sectional, elevational view diagrammatically showing the soldering apparatus of this embodiment;

Fig. 2 is a plan view of Fig. 1;

Fig. 3 is a cross-sectional, elevational view showing, on an enlarged scale, the nozzle member of the apparatus; and

Fig. 4 is a fragmentary plan view of the nozzle member of Fig. 3.

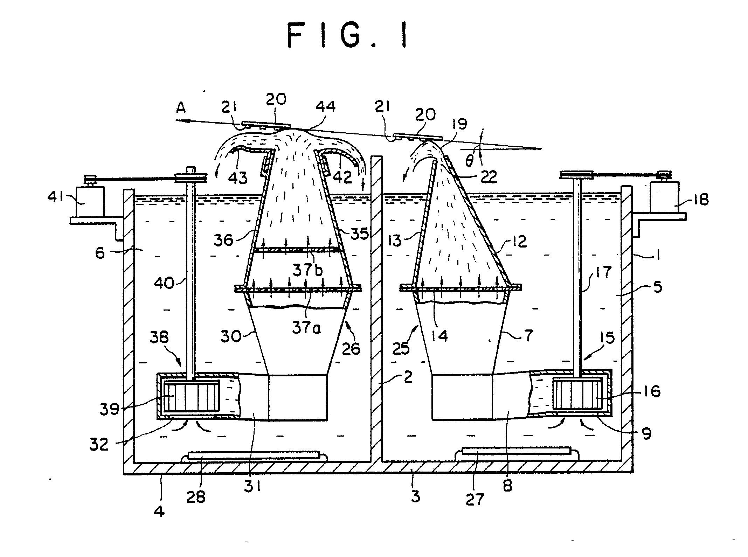

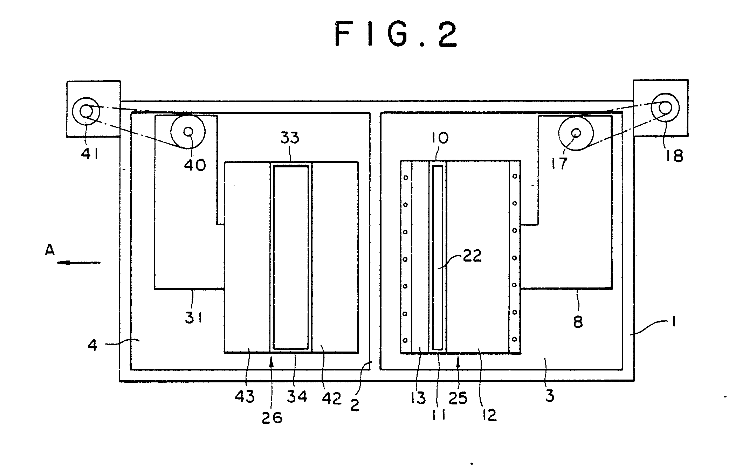

Referring to Figs. 1 and 2, the reference numeral 1 denotes a pot which is generally a rectangular in shape and which is open on the top side thereof. The pot 1 is divided by a partition wall 2 into separate first and second tanks 3 and 4 in a tandem fashion. The first and second tanks 3 and 4 contain molten solders or melts 5 and 6, respectively. The melts 5 and 6 are maintained at suitable temperatures by heating elements 27 and 28 such as electric resistance coils or the like. Normally, the melt 5 in the first tank 3 is maintained at a temperature in the range of 235 to 240°C, while the melt 6 in the second tank 4 is maintained in a temperature range generally slightly higher than that of the melt 5, more specifically, in the range of 240 to 245°C. The melts 5 and 6 are respectively applied to printed circuit boards by solder applicator means which are generally indicated by reference numerals 25 and 26.

Disposed within the first tank 3 is an upwardly extending nozzle member 7, the lower end of which is connected to one end of a conduit 8. At the other end, the conduit 8 is provided with a molten solder supply hole 9 which is opened toward the bottom of the tank 3. Consequently, the lower portion of the nozzle member 7 is in flow communication with the first tank 3. The nozzle member 7 is formed in a substantially rectangular shape in section and has a sectional area gradually reduced from its middle portion toward its upper tip end. More specifically, of the two pairs of opposing side walls 10 to 13 which define the configuration of the nozzle member 7, the side plates 10 and 11 are disposed substantially parallel with each other but the front and rear plates 12 and 13 are converged toward the upper end of the nozzle member 7.

A feed means 15 is provided in the tank 3 for continuously supplying the molten solder 5 in the first tank 3 to the nozzle member. The feed means 15 preferably includes a propeller assembly 16 which is disposed in the conduit 8 adjacent to the opening 9. The propeller 16 is provided with a shaft 17 which is connected to drive means including a motor 18, so that it is rotated about a shaft 17 upon actuation of the motor 18 to supply the molten solder 5 in the first tank 3 continuously to the nozzle 7. The supplied molten solder flows upward through the nozzle 7 and overflows from its upper end 22 to return to the first tank 3.

The overflow outlet 22 which is defined at the upper ends of the side plates 12 and 13 of the nozzle 7 is oriented such that the molten solder overflowing therefrom forms a wave 19, generally a standing wave, extending in the direction of arrow A as shown particularly in Fig. 1. Printed circuit boards 20 each having chip type parts 21 temporarily attached to its lower side by means of an adhesive or the like are fed from right to left in Fig. 1 or in the direction of arrow A along a predetermined path of travel by operation of ordinary transfer means. In this instance, it is preferred that the printed circuit board 20 travel in a rearwardly inclined posture and along a similarly inclined path of travel at an angle of θ with a horizontal plane so that the molten solder excessively applied to the board can drop in a facilitated manner. As the printed circuit board 20 passes over the nozzle 7, its lower side is brought into co-current contact with the molten solder wave 19 for soldering the parts on the underside of the printed circuit board 20. Since the upper surface of the solder wave 19 is in movement in the same direction as the printed circuit board 20, the molten solder can arrive at the recessed portions behind the chip parts in an accelerated manner without permitting gases to be trapped in those portions. Indicated at 14 is a perforated plate which is provided to control the uniform upward flow of the molten solder through the nozzle 7 across the width thereof.

The printed circuit board 20 which has undergone the soldering treatment with the molten solder 5 in the first applicator means 25 is then passed to the adjacently located second applicator means 26 for contact with the second molten solder 6 which is generally maintained at a higher temperature than the first melt 5. The second solder applicator means 26 may be arranged to have the same construction as the above-described first applicator means 25. In this instance, however, it is preferred that the second applicator means 26 be adapted to form a solder wave which is directed in a direction reverse to the wave 19, namely, in a direction opposite to the arrow A. By so doing, the lower side of the printed circuit board 20 is held in counter-current contact with the molten solder. Nevertheless, it is more preferred that the second applicator means 26 be of the type which is adapted to overflow the molten solder on the front and rear sides thereof as shown particularly in Fig. 1.

The second soldering means 26 of Fig. 1 is provided with an upwardly extending riser portion 30 positioned within the second tank 4. The lower end of the riser 30 is connected to one end of a conduit 31 and communicates directly with the second tank 4 through a solder feed port 32 which is opened toward the bottom of the second tank 4 at other end of the conduit 31. The riser 30 is substantially rectangular in section and has a sectional area gradually reduced from its middle portion toward its upper tip end. More specifically, the riser 30 is constituted by two pairs of opposing side plates 33 to 36, namely, a pair of substantially parallel side plates 33 and 34 and a pair of upwardly converging side plates 35 and 36.

The second applicator means 30 is provided with a solder feeder 38 similar to the feeder 15 of the first applicator means 25, including a propeller 39 which is driven from a motor 41 to rotate about a shaft 40 for supplying the molten solder 6 in the tank 4 to the riser 30 through the opening 32. The side plates 35 and 36 of the riser 30 are inclined substantially symmetrically as shown in the drawing and provided with guide members 42 and 43 at the respective upper ends. Thus, the molten solder which is forced to flow upwardly through the riser 30 flows out from the upper end of the riser, forming an overflow layer of molten solder flowing two opposite sides with its transversely extending center portion 44 slightly rising. The overflown solder returns to the tank 4. The lower side of the printed circuit board 20 is contacted with the center portion 44 of the overflowing solder layer to effect a second soldering treatment. The part chips which have the respective rear portions sufficiently soldered in the soldering treatment of the first stage are completely connected to the printed circuit board 20 by the soldering treatment of the second stage both mechanically and electrically. Moreover, the first stage treatment can serve as a preheating step for the second soldering stage and, hence, the soldering treatment in the second stage can be performed effectively without exerting the thermal stress on the electric parts on the board. Denoted at 37a and 37b are flow control plates which correspond to the afore-mentioned plate 14.

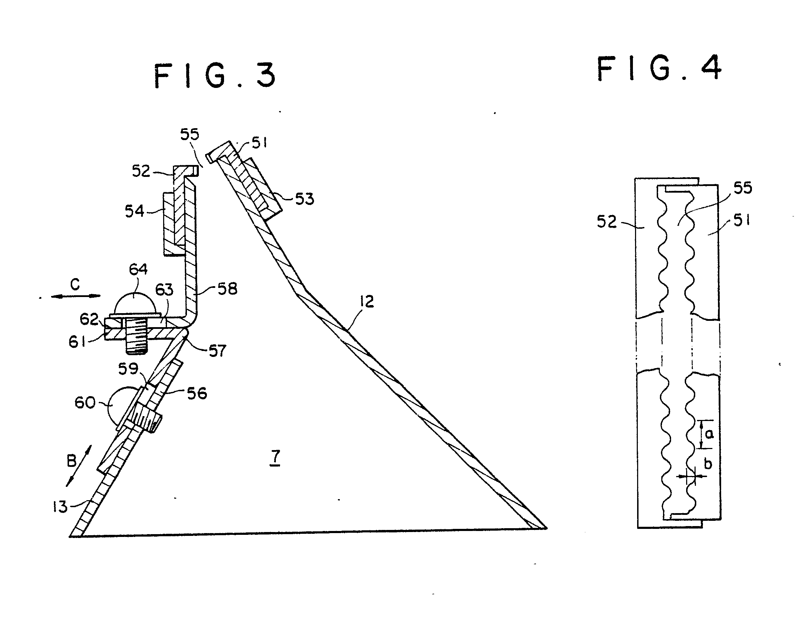

Referring now to Figs. 3 and 4, there is shown a preferred form of the above-described nozzle member 7. In the particular example shown, the opening at the spouting end of the nozzle 7 is defined by a pair of attachment plates 51 and 52 with teeth at the opposing inner edges. The toothed attachment plates 51 and 52 are detachably supported in holders 53 and 54 which are provided on the side plates 12 and 13 adjacently to the upper tip end of the nozzle 7, and when mounted in position, they define therebetween a wavy outlet 55 as shown in Fig. 4. The opposing inner edges of the attachment plates 51 and 52 may be toothed in the form of a saw-tooth or square wave instead of the sinuous or sine wave form which is used in the particular example shown. A nozzle construction with toothed portions around its outlet in this manner serves to roughen the upper surfaces of the molten solder which overflows from the nozzle, thereby urging the molten solder into the recessed portions on the lower side of the printed circuit board. In this connection, it is recommended that the crest-to-root distance (b) of the toothed portions is in the range of 2 to 5 mm and the root-to-root distance (a) in the range of 4 to 10 mm. The marginal edge of the attachment plate 52 may be formed straight if desired.

The embodiment shown in Fig. 3 has another feature that the height and direction of the overflowing solder wave can be adjusted arbitrarily. In the case of the nozzle 7 (or riser 30) of Fig. 1, it is possible to adjust the height of the solder wave 19 (or center portion 44) by controlling the rotational speed of the motor 18 (or 41), but it is insufficient for forming optimum waves suitable to various printed circuit boards to be soldered. Thus, in the embodiment shown in Fig. 3, the side plate 13 of the nozzle 7 is split into a fixed portion 56, an obliquely movable portion 57 and a horizontally movable portion 58. The movable plate 57 is provided with a slot 59 and fixed to the fixed portion 56 by a screw 60 which is threaded into the fixed portion 56 through the slot 59. Therefore, the movable plate 57 is adjustable in the direction B (in the direction of inclination of the fixed portion 56) by a distance determined by the length of the slot 59 and the diameter of the screw 60. Similarly, a screw 64 is threaded into a flange portion 61 of the movable plate 57 through a slot 63 in an overlying flange portion 62 of the movable plate 58 to support the latter adjustably on the movable plate 57, so that the movable plate 58 is adjustable in the direction C (normally in the horizontal direction) relative to the movable plate 57. Thus, it is possible to adjust the orientation and size of the overflow outlet 55 by shifting the positions of the movable plates 57 and 58 for the purpose of adjusting the direction and height of the overflowing solder wave.

**Claims**

1. An apparatus for soldering printed circuit boards (20) moving along a predetermined path of travel (A), said apparatus comprising:

a first open-topped tank (3) for containing a first molten solder (5);

a second open-topped tank (4) located in a position adjacent to and downstream of said first tank (3) along said path of travel (A) of said printed circuit boards for containing a second molten solder (6);

an upwardly extending nozzle member (7) having the lower end thereof in flow communication with said first tank (3);

solder feed means (15) operable for supplying said first molten solder (5) in said first tank (3) to said nozzle member (7) to cause said first molten solder to overflow from the tip end of said nozzle member (7);

said nozzle member (7) having an overflowing outlet (22) at the upper end thereof which is oriented to form a wave of overflowing solder extending in the direction of said path of travel (A) of said printed circuit boards;

means (26) for applying said second molten solder (6) in said second tank (4) to said printed circuit boards;

whereby the lower side of a printed circuit board is brought into co-current contact with the upper surface of said wave to preheat said printed circuit board and to apply said printed circuit board and to apply said first molten solder (5) thereto, and said printed circuit board subjected to the treatment with said first molten solder (5) is then subjected to the soldering treatment with said second molten solder (6);

characterised in that said overflowing outlet (22) of said nozzle member (7) is provided with toothed portions (51, 52) therearound for roughening the upper surfaces of said wave of overflowing solder.

2. The apparatus as set forth in Claim 1, wherein said means (26) for applying said second molten solder includes an upwardly extending riser (30) having the lower end thereof in flow communication with said second tank (4), and feed means (31, 32, 38) operable for supplying said second molten solder (6) in said second tank (4) to said riser (30) to cause said second molten solder (6) to overflow from the upper end of said riser, said upper end of said riser (30) being so arranged as to form an overflowing solder layer flowing in directions the same as and opposite to the direction of the travel (A) of said printed circuit boards with the upper surface of said overflowing solder layer being adapted to be contacted with the lower side of said printed circuit boards.

3. The apparatus as set forth in Claim 1 or Claim 2, wherein said nozzle member (7) comprises a first pair of opposing side plates (10, 11) disposed parallel with each other and a second pair of opposing front and rear plates (12, 13) upwardly converged to form between the converged upper ends thereof said overflowing outlet (22) extending in a direction perpendicular to said path of travel (A) of said printed circuit boards, the position of the upper end of at least one of said front and rear plates (12, 13) being adjustable to vary the orientation and area of said overflowing outlet (22) for the adjustment of the direction and height of said overflowing solder wave.

**Patentansprüche**

1. Vorrichtung zum Löten von gedruckten Verdrahtungen (20), die sich entlang eines vorgegebenen Weges (A) bewegen, wobei die Vorrichtung enthält:

einen ersten oben offenen Tank (3) zur Aufnahme eines ersten geschmolzenen Lötmittels (5),

einen zweiten oben offenen Tank (4), der nahe und stromabwärts des ersten Tanks (3) angeordnet ist, entlang dem Weg (A) der gedruckten Verdrahtungen zur Aufnahme eines zweiten geschmolzenen Lötmittels (6), eine sich nach oben erstreckende Düse (7), deren unteres Ende in Fließverbindung mit dem ersten Tank (3) steht,

Zuführungsmittel (15) für das Lötmittel zum Zuführen des ersten geschmolzenen Lötmittels (5) in dem ersten Tank (3) zur Düse (7), so daß dieses erste Lötmittel die Spitze der Düse (7) überfließt, wobei diese Düse (7) einen Überlaufauslaß (22) am oberen Ende aufweist, der so ausgebildet ist, daß er eine Welle überfließenden Lötmittels bildet, die sich in Richtung des Weges (A) der gedruckten Verdrahtungen erstreckt, Mittel (26) zum Aufbringen des zweiten geschmolzenen Lötmittels (6) in dem zweiten Tank (4) auf die gedruckten Verdrahtungen, wobei die untere Seite der gedruckten Verdrahtungen in Kontakt mit der Oberfläche der Welle gebracht wird, um die gedruckte Verdrahtung zu erhitzen und zum Aufbringen des ersten geschmolzenen Lötmittels (5) darauf und wobei wobei die mit dem ersten geschmolzenen Lötmittel (5) behandelte gedruckte Verdrahtung der Behandlung mit dem zweiten geschmolzenen Lötmittel (6) ausgesetzt wird, dadurch gekennzeichnet, daß der Überlaufauslaß (22) der Düse (7) mit gezahnten Abschnitten (51, 52) rundherum versehen ist zur Aufrauhung der Welle des überfließenden Lötmittels.

2. Vorrichtung nach Anspruch 1, dadurch gekennzeichnet, daß das Mittel (26) zum Aufbringen des geschmolzenen zweiten Lötmittels einen sich nach oben erstreckenden Steiger (30) aufweist, dessen unteres Ende in Fließverbindung mit dem zweiten Tank (4) steht, daß Mittel (31, 32, 38) vorgesehen sind zum Zuführen des zweiten geschmolzenen Lötmittels in den zweiten Tank (4) zum Steiger (30), damit dieses Lötmittel das obere Ende des Steigers überfließen kann, daß das obere Ende des Steigers (30) so ausgebildet ist, daß er eine überfließende Lötmittelschicht in Richtung der und entgegengesetzt zur Richtung der Bewegung (A) der gedruckten Verdrahtungen bildet, wobei die obere Oberfläche der überfließenden Lötmittelschicht in der Lage ist, mit der unteren Seite der gedruckten Verdrahtung in Kontakt zu kommen.

3. Vorrichtung nach einem der Ansprüche 1 oder 2, dadurch gekennzeichnet, daß die Düse (7) ein erste Paar gegenüberliegender Seitenplatten (10, 11) aufweist, die parallel zueinander angeordnet sind und ein zweites Paar sich gegenüberliegender Vorder- und Rückenplatten (12, 13), die nach oben konvergieren, um zwischen den konvergierenden oberen Enden den Überlaufauslaß (22) zu bilden, der sich in einer Richtung senkrecht zum Weg (A) der gedruckten Verdrahtungen erstreckt und daß die Position des oberen Endes wenigstens einer der Vorder- und Rückenplatten (12, 13) einstellbar ist, um die Ausrichtung und den Berreich des Überlaufauslasses (22) zu verändern zur Finstellung der Richtung und Höhe der überfließenden Lötmittelwelle.

**Revendications**

1. Appareil pour braser ou souder des plaquettes (20) de circuits imprimés se déplaçant le long d'un trajet (A) prédéterminé, ledit appareil comprenant:

un premier réservoir (3) à sommet ouvert destiné à contenir une première brasure (5) fondue;

un second réservoir (4) à sommet ouvert, situé en une position voisine et en aval dudit premier réservoir (3) le long dudit trajet (A) desdites plaquettes de circuit imprimé, destiné à contenir une seconde brasure (6) fondue;

un élément d'ajutage (7) s'étendant vers le haut et dont l'extrémité inférieure communique avec ledit premier réservoir (3);

un moyen (15) d'alimentation en brasure pouvant servir à faire parvenir ladite première brasure (5) fondue dudit premier réservoir (3) audit élément d'ajutage (7) pour obliger ladite première brasure fondue à déborder de l'extrémité dudit élément d'ajutage (7);

ledit élément d'ajutage (7) ayant une sortie (22) de débordement à son extrémité supérieure, qui est orientée de manière à former une vague ou onde de brasure en débordement s'étendant dans la direction dudit trajet (A) de déplacement desdites plaquettes de circuits imprimés;

un moyen (26) pour appliquer ladite seconde brasure (6) fondue dudit second réservoir (4) auxdites plaquettes de circuits imprimés;

de sorte que le côté inférieur d'une plaquette à circuit imprimé est mis en contact à co-courant avec la surface supérieure de ladite vague pour préchauffer ladite plaquette de circuit imprimé et y appliquer ladite première brasure (5) fondue, et ladite plaquette de circuit imprimé soumise au traitement par ladite première brasure (5) fondue est ensuite soumise au traitement de brasage à l'aide de la seconde brasure (6) fondue, appareil caractérisé en ce que ladite sortie (22) de débordement dudit élément (7) d'ajutage est équipée de parties dentées (51, 52) tout autour pour rendre rugueuses les surfaces supérieures de ladite vague ou onde de brasure en débordement.

2. Appareil selon la revendication 1, dans lequel ledit moyen (26) pour appliquer ladite seconde brasure fondue comprend un tube vertical (30), s'étendant vers le haut et dont l'extrémité inférieure communique avec ledit second réservoir (4), et un dispositif d'alimentation (31, 32, 38) que l'on peut actionner de manière qu'il fournisse ladite seconde brasure (6) fondue du second réservoir (4) audit tube vertical (30) pour provoquer le débordement de la seconde brasure (6) fondue de l'extrémité supérieure dudit tube vertical, ladite extrémité supérieure dudit tube (30) étant agencée de manière à former une couche de brasure en débordement s'écoulant dans des directions identiques et opposées à la direction de déplacement (A) desdites plaquettes de circuits imprimés, la surface supérieure de ladite couche de brasure en débordement étant agencée de manière à venir au contact avec le côté inférieur desdites plaquettes de circuits imprimés.

3. Appareil selon la revendication 1 ou la revendication 2, dans lequel ledit élément d'ajutage (7) comprend une première paire de plaques latérales (10, 11) opposées disposées parallèles l'une à l'autre et une seconde paire de plaques avant et arrière (12, 13) opposées convergeant vers le haut pour former entre leurs extrémités supérieures convergentes ladite sortie (22) de débordement s'étendant dans une direction perpendiculaire à celle du trajet de déplacement (A) desdites plaquettes de circuits imprimés, la positon de l'extrémité supérieure d'au moins l'une desdites plaques avant et arrière (12, 13) étant réglable de manière à faire varier l'orientation et la lumière de ladite sortie (22) de débordement pour ajuster la direction et la hauteur de ladite vague de brasure en débordement.

# F I G . I

# F I G . 2

# FIG. 3

# FIG. 4